Europäisches Patentamt

European Patent Office

Office européen des brevets

(11) Publication number: **0 003 469**
**B1**

# EUROPEAN PATENT SPECIFICATION

(45) Date of publication of patent specification: **09.12.81**

(21) Application number: **79850002.1**

(22) Date of filing: **17.01.79**

(51) Int. Cl.³: **C 04 B 31/00, C 04 B 31/06**

(54) **Hydraulically binding composition.**

(30) Priority: **20.01.78 SE 7800706**

(43) Date of publication of application:
**08.08.79 Bulletin 79/16**

(45) Publication of the grant of the European patent:
**09.12.81 Bulletin 81/49**

(84) Designated Contracting States:
**BE CH DE FR GB NL**

(56) References cited:
**CH - A - 358 735**
**FR - A - 1 525 762**
**FR - A - 2 136 768**
**FR - A - 2 312 465**
**FR - A - 2 354 984**

(73) Proprietor: **ROCKWOOL AKTIEBOLAGET**
**Fack 615**
**S-541 86 Skövde (SE)**

(72) Inventor: **Aberg, Ulf**
**Stjärnvägen 29**
**S-541 00 SKÖVDE (SE)**

(74) Representative: **Avellan-Hultman, Olle**
**Avellan-Hultman Patentbyra AB P.O. Box 5366**
**S-102 46 Stockholm 5 (SE)**

Courier Press, Leamington Spa, England.

## Hydraulically binding composition

Since long objects have been manufactured from hydraulically binding masses in which cement is the binding component and in which asbestos fibres is a reinforcing component. Depending on the good strength properties in objects made of masses of the said type it has been possible to manufacture thin plates for building purposes and also pipes having relatively thin walls.

For working hygienic reasons there is a wish to eliminate or at least reduce the amount of asbestos in the said masses. Instead of using asbestos fibres it thereby ought to be close at hand to use synthetic mineral fibres manufactured by fibrating melted mineral substances. In this connection some success has been obtained, but it has proved that the strength is not as good as expected especially not after the products have been used for some time. The generally accepted explanation therefore is that the mineral fibres are subjected to corrosive attacks in the strong alcalic milieu provided by the cement particles. The corrosive attacks later have provided both indications of fracture and have caused a reduction of volume whereby the mineral fibres in the cement mass are laid free. In both cases the corrosion causes a reduced reinforcement property and thereby the strength is deteriorated. The above opinion has been supported by studies of glass fibres in the said alcalic milieu whereby actual corrosive damages have been observed. A bad or by time reduced strength, however, has also been obtained with fibres which are obviously resistant enough not to get corrosive damages. This is the basic problem of the present invention.

The invention is based on the observation that the mechanism for laying free of the reinforcement fibre and the subsequent reduction of the reinforcing properties is contraction phenomena in the cement mass when the cement is binding. The said contraction phenomena are considered of macroscopic and of microscopic viewpoint. Considered macroscopically some contraction of shrinkage can be noted. The mass comprising both cement grains and other substances, however, have different tendency for contraction in different parts. Thereby there is both higher and lower contraction than the macroscopical contraction. Therefore stresses appear in the mass which obviously tend to provide cracks and crack zones within the areas of the mass in which the tensile strength and the adhesion between the different grains is low. If now the adhesion between one cement grain and one reinforcement fibre is lower than the adhesion between the cement grain and the adjacent sand particle or cement particle it can be expected that the adhesion between the cement particle and the reinforcement fibre is broken.

Therefore a component is admixed in the mass which component is capable of compensating the microscopical contraction. The adhesion between the reinforcement fibres and the cement grains is thereby unloaded and the reinforcement fibres therefore to a great extent keep their reinforcing action.

The French patent 1,525,762 relates to a hydraulically binding cement composition which is mixed with glass fibres and which composition also comprises a synthetic resin which is introduced in the composition for the purpose of protecting the fibres against attacks of the alcalic cement. In the patent the reinforcing glass fibres are consequently protected by the synthetic resin, but problems may appear in getting a homogeneous adhesion between the cement and the synthetic resin on one hand and the cement and the adjacent sand particle or cement particle on the other hand.

From the British patent 1,405,090 a reinforced inorganic cementishious product is previously known which comprises cement, fibres, a filler and a polymeric material like thermoplastic material. The polymeric material is incorporated in the matrix to control the stress transfer between the fibres reinforcement and the matrix. The polymeric material is preferably introduced in the composition in the form at an aqueous dispersion of latex and is added in rather high amounts. Also naturally occurring polymeric materials such as natural rubber lateces may be added.

None of the two mentioned patents deals with the problem of eliminating cracks of the reinforcement fibres by introducing a contraction or shrinkage compensating component. Surprisingly it has proved that the adhesion of a contraction compensating component in the form of particles of finely ground rubber, for instance from waste automobile tires, the main portion of which has a diameter of less than 10 $\mu$m strongly reduced or eliminate the cracks of the reinforcement fibres which otherwise occur. If now there is a sufficient number of finely divided elastomeric particles and they are presented sufficiently close to each other they are capable to compensate the contraction or shrinkage occuring when the cement is binding. In order not to hazard the strength, however, the elastomeric particles must not take to large volume and therefore they must be of a small size, and it has been found that the size of the elastomeric particles at least mainly should be less than 10 $\mu$m.

The contraction can additionally be compensated by introducing a contraction or shrinkage compensating component of fibre type, namely such fibres which actually are formed by bundles of small fibres, so called fibrills. As examples of fibres which can be used for this purpose and which are of the above mentioned type can be mentioned asbestos fibres and cellulose fibres. When the said fibres have been embedded in the mass and the microscopic contraction takes place the fibres are split up into fibrills, whereby the volume of the fibres increases and the fibres thereby compensate the contraction which takes place in the mass.

It has been found that the bundles of fibres thus utilized should be present in an amount of between 10 and 30% by weight of the amount of reinforcement substances. Like the rubber particles the best effect is obtained if the bundles of fibres are finely divided.

The invention also relates to objects manufactured from the above described composition by mixing same with water, forming the curing the objects.

Example 1

Test bodies of 150 × 50 × 7 mm were made by cement having the addition of reinforcement fibres indicated below. Tests were made with rubber particles obtained by fragmenting and wind sifting of rubber, so that the main portion of the particles have a size which is less than $10\mu$. The strength of the test bodies was determined after a storing time.

| Reinforcement fibres and addition of rubber in % by weight | Brake elongation (mm) Storing time (days) | | Strength (N/mm²) Storing time (days) | |
|---|---|---|---|---|
| | 4 days | 90 days | 4 days | 90 days |
| Glass fibres 7,7 % | 1,1 | 1,0 | 12,3 | 8,1 |
| Glass fibres 7,7 %. Rubber particles 1,0 % | 1,2 | 1,0 | 13,4 | 10,0 |
| Glass fibres 7,7 %. Rubber particles 3,0 % | 1,4 | 1,1 | 13,9 | 11,1 |

## Claims

1. Hydraulically binding composition comprising cement and reinforcement fibres of glass, and it may also contain a grain formed ballast material like sand, characterized in that the composition also comprises, a contraction compensating component, particles of finely ground rubber, for instance from waste automobile tires, the main portion of which has a diameter less than $10\mu$m.

2. Composition according to claim 1, characterized in that the amount of rubber particles are within the range of 1—35 percent by weight of the reinforced glass fibres.

3. Composition according to claim 1 or 2, characterized in that the composition comprises, as a contraction compensating component, a combination of finely ground rubber particles the diameter of which do not exceed $10\ \mu$m for more than 15 percent by weight thereof and bundles of fibres the average diameter of which is within the range of 1—30 $\mu$m.

## Revendications

1. Composition à liant hydraulique comprenant du ciment et des fibres de verre de renforcement et qui peut également contenir une matière de remplissage formée par des grains, telle que du sable, caractérisée en ce que la composition comprend également, en tant qu'élément de compensation du retrait, des particules de caoutchouc finement broyé provenant, par exemple, de pneus d'automobile mis au rebut, dont la plus grande partie a un diamètre inférieur à 10 $\mu$m.

2. Composition selon la revendication 1, caractérisée en ce que la proportion de particules de caoutchouc est comprise entre 1 et 35 pour cent en poids des fibres de verre de renforcement.

3. Composition selon la revendication 1 ou 2, caractérisée en ce que la composition comprend, en tant qu'élément de compensation du retrait, une combinaison de particules de caoutchouc finement broyé dont le diamètre ne dépasse pas 10 $\mu$m qui représentent plus de 15 pour cent en poids de l'élément de compensation du retrait et des faisceaux de fibres dont le diamètre moyen est compris entre 1 et 30 $\mu$m.

## Patentansprüche

1. Hydraulisch abbindende Zusammensetzung, die neben einem Bindemittel und Verstärkungsfasern aus Glas gegebenenfalls ein körniges Balastmaterial wie Sand enthält dadurch gekennzeichnet, daß die Zusammensetzung weiterhin als Kontraktions-Kompensations-Komponente Partikel aus feingemahlenem Gummi enthält, zum Beispiel aus Automobil-Altreifen, von denen der Hauptteil einen unterhalb $10\mu$m (Mikrometer) liegenden Durchmesser aufweist.

2. Zusammensetzung nach Anspruch 1, dadurch gekennzeichnet, daß der Anteil an Gummipartikeln in einem Bereich von 1 bis 35 Gew.-% der Verstärkungsfasern aus Glas liegt.

3. Zusammensetzung nach einem der Ansprüche 1 oder 2, dadurch gekennzeichnet, daß die Zusammensetzung als Kontraktions-Kompensations-Komponente eine Kombination aus feingemahlenen Gummipartikeln und Bündeln von Fasern enthält, wobei bei mehr als 15 Gew.-% der Gummipartikel deren Außendurchmesser 10 $\mu$m nicht übersteigen und wobei der durchschnittliche Durchmesser der Faserbündel in einem Bereich von 1 bis 30 $\mu$m (Mikrometer) liegt.